# EUROPEAN PATENT SPECIFICATION

(11) **EP 3 477 840 B1**
(45) Date of publication and mention of the grant of the patent: **27.05.2020**
(21) Application number: 18000829.4
(22) Date of filing: 25.10.2018
(51) Int. Cl.: H02M 3/335, B23K 9/09, H01F 27/28, H01F 38/08, B23K 9/10, B23K 11/24, H02M 1/00

(54) **WELDING TRANSFORMER**
SCHWEISSTRANSFORMATOR
TRANSFORMATEUR DE SOUDAGE

(30) Priority: 26.10.2017 SI 201700288
(43) Date of publication of application: 01.05.2019
(73) Proprietor: Univerza v Mariboru, Fakulteta za elektrotehniko, racunalnistvo in informatiko, 2000 Maribor (SI)
(72) Inventor: Brezovnik, Robert, 2360 Radlje ob Dravi (SI); Dolinar, Drago, 2000 Maribor (SI); Petrun, Martin, 2364 Ribnica na Pohorju (SI); Ritonja, Jozef, 2000 Maribor (SI); Truntic, Mitja, 2000 Maribor (SI)
(74) Representative: Marn, Jure

(56) References cited:
- EP-A2- 1 760 867
- EP-A2- 1 976 104
- EP-A2- 2 056 439
- DE-C1- 4 302 443
- JP-A- 2011 212 690

## Description

### FIELD OF THE INVENTION

Electrical engineering; transformers; dc-dc converters

### TECHNICAL PROBLEM

The technical problem solved by the invention is elimination of the long massive connections between exits from the secondary winding and rectifier means and the need for reduction of intensive cooling of these connections due to high losses.

### STATE OF THE ART

The known arrangements of industrial relatively high power resistance spot welding systems used for sheet metal joining, among different applications also in the production of car bodies, have a unified structure comprising an input ac-ac converter for supplying a single-phase transformer with one primary and one secondary winding divided into two equal parts with a so-called central tapping, and an output rectifier. The two power diodes of an output rectifier are connected with both parts of the secondary winding in a way to obtain the sufficiently high output dc welding current as the sum of two currents in both parts of secondary winding.

The conventional high power resistance spot welding systems with a dc welding current may differ from each other, while the base structure always includes an adequate voltage source, an input rectifier, a dc bus, an inverter, a single-phase welding transformer with a primary and secondary winding, which is divided into two equal parts with the so-called central tapping, and output rectifier, wherein the two rectifier power diodes of an output rectifier are connected so that the dc welding current at the output is the sum of two rectified currents from each part of the secondary winding. The arrangements of an input rectifier and inverter, as well as transformer and an output rectifier can be different. The primary side of the conventional welding transformer is usually supplied with a pulse width modulated (PWM) voltage with a constant switching period with a frequency of around 1 kHz, may be less or more, but for certain reasons it is bounded up and down. Existing manufacturers of resistance spot welding systems are using one or, exceptionally, several power diodes in each branch of an output rectifier, and the relatively high current in these power diodes with relatively high internal ohmic resistances results in relatively high Joule losses. High Joule losses also occur in massive connections between secondary winding and power diodes, which reduces the efficiency of the entire system.

A commonly known fact is that with the increasing frequency of the PWM supply voltage at the same power of the transformer it is possible to reduce the cross-sectional area of the iron core of the transformer accordingly, which due to the reduction of dimensions automatically causes the corresponding reduction in the size of the windings and consequently the reduction of weight. It is also commonly known that the dc welding current at the output from the output rectifier decreases with increasing frequency of the supply voltage, which is analytically disclosed in reference DOI 10.1109/***TIE 201**7*.2711549, IEEE. The inventors in the US20140321184A1 used the known fact and increased the frequency of the supply voltage to 10 kHz keeping a high value of secondary current 20 kA by separating a single secondary winding with a central tapping and belonging output rectifier into the ten smaller secondary windings with central tapping and belonging smaller output rectifiers, realized by MOSFET transistors, all ten secondary windings with output rectifiers connected in parallel. According to the claims in US20140321184A1, the increase in the number of parallel-connected secondary branches can either increase the value of the secondary welding current at the same frequency of the PWM power supply, or it can increase the frequency of PWM supply voltage by the unchanged value of the secondary welding current, which enables a suitable geometric reduction of the transformer, and therefore also a reduction of weight. The main disadvantage of the proposed concept in US20140321184A1 is the considerably increased complexity of the whole structure, which affects the cost and reliability of operation, although allows operation at significantly higher frequencies of PWM supply voltage.

The type and purpose of presented ac- de converter disclosed in EP 1 760 867 A2 is considerably different from the proposed one. It is stated there that the connection between some elements and rectifier elements can be carried out without bonding wires, but both output terminals are there far from the output rectifier elements, which in case of high welding currents causes strong magnetic fields and very large losses caused by the proximity effect causing non-homogenous current distribution in windings causing an additional increase of the so-called AC resistance.

The arrangement of secondary turns presented in EP 2 056 439 A2 consists of two conductive parts, which are connected with the output rectifier elements respectively by a bonding wire where is specially emphasized that have both metal sheets forming a secondary winding turn have a similar shape but a different surface area. These facts also applies for a possible FET arrangement mentioned in the same reference. In addition, if the surface areas of both parts are coincidentally identical the primary winding is always stacked in the sandwich between the two metal sheets forming the secondary turn. In the proposed arrangement of the secondary windings with integrated rectifier elements, the both parts of secondary winding turn are identical having an identical surface area.

The use of U-shaped secondary turns in JP 2011 212690 A is so far widely known. In a present application is disclosed an original arrangement of output rectifier which is integrated between the two identically equal plates representing the two parts of the single secondary turn.

The dc-dc converter topology presented in EP 1 976 194 A2 is again different from the proposed one having an output filter in form of a choke and capacitor, which is typical for low power resonant converters. It is obvious that secondary winding turns in some embodiments are divided in more parts and the coils of the primary and secondary windings are stacked in a sandwich form alternately, although this is not disclosed as a novelty. However, the description in EP 1 976 194 A2 clearly indicates that the output diodes are connected to the terminals of the secondary winding and are not distributed along the individual secondary turns.

The topology of welding system circuit in DE 43 02 443 C1 is also similar to the topology of all resistance spot welding systems. However, there is an obvious difference in comparison to the proposed arrangement in present application, because an indirect connection of rectifier elements on the common cooling element is mentioned, which means an indirect connection.

### DESCRIPTION OF NEW INVENTION

The welding transformer solves the technical problem presented above by integrating at least one connecting rectifier mean between two separated parts of each two elements of the secondary winding. This eliminates the need to use rectifier means in connections, which reduces losses due to reduced length of connections, which ensure easier arrangement of cooling.

The present invention refers to the performance of a transformer and an output rectifier in the sense of direct integration of an output rectifier into two separate elements of the secondary winding, wherein both rectifying means can comprise one or more parallel-connected power diodes or appropriate transistors, preferably MOSFET transistors. The consequence of integration of the rectifier means directly into the two transformer turns, named also two elements of the secondary winding, is elimination of a robust and massive connecting part, which enables the necessary change in the electrical properties of the welding system, thereby reducing losses and enabling operation with the higher frequency of the supplied voltage of the welding transformer.

The proposed solution with integration of rectifier elements in the form of power diodes or MOSFET transistors operating as a synchronous rectifier with the part of secondary winding is less complex than conventional solutions but it allows significantly shorter output connections. The proposed modified structure changes the electrical parameters of the welding system in such a way that, despite the required unchanged maximum value of the output welding current and the use of rectifier means in the form of power diodes or MOSFET transistors, it is further possible to reduce the Joule losses in the secondary connections that become shorter, while simplifying also the cooling of rectifier means in the form of power diodes or MOSFET transistors, which, when proposed for the integration of secondary windings with output rectifier means in the form of power diodes or MOSFET transistors, is cooled indirectly, simultaneously with the cooling of the secondary winding. The cooling is carried out with liquid, preferably with water or air. The proposed arrangement allows a significant increase of the power density of the welding transformer with an output rectifier. Due to the change of the electrical properties of the secondary part of the welding system, it can also be planned to operate at slightly higher frequencies than 1 kHz, without parallelizing the secondary winding, as is done in the US 20140321184A1. Parallel arrangement of the secondary part, as presented in the US 20140321184A1, has, in addition to the increased complexity, at least one other considerable disadvantage, which is reflected in the negative influences caused by the electromagnetic coupling between the subsystems, which are influenced by high currents and a higher frequency.

The output rectifier can be arranged either with power diodes, for example, used in conventional arrangement in US5942134A with two power diodes, or with two MOSFET transistors in DE102007042771B3, taking into account the fact that it is possible to achieve higher output welding current by replacing the single power diode or MOSFET in an individual branch of the secondary winding by the corresponding number of parallel-connected power diodes or MOSFET transistors. Also, the form of a secondary winding may be different, which may consist of one or more sequentially or parallel-connected turns which may have an O, C or E shape, as explained in US7978040B2.

In this case, due to the integration of a power diodes or MOSFET transistors into the individual turns of secondary winding, the total losses are reduced, as certain connections are eliminated. It is also quite understandable that the maximum reduction of losses on the secondary side including an output rectifier is achieved by replacing the power diodes with the appropriate MOSFET transistors operating as a synchronous rectifier.

The invention is defined by the features of claim 1. The dependent claims recite advantageous embodiments of the invention.

It should be emphasized that there is no need that at least one primary winding, at least one pair of secondary winding elements and at least one iron core forms any particular group in relation to each other. Thus, for example, both elements of the secondary winding may wrap the primary winding, or may be wound around it, or vice versa. It is only important that they are electrically insulated from one another.

The welding transformer further comprises rectifying means, which are selected from the group consisting of a power diode, a transistor, a MOSFET transistor.

The welding transformer according to a preferred embodiment of the invention may further comprise at least two, preferably at least three, interconnected coils named elements of the primary winding and at least one pair of turns of secondary winding named one pair of elements of secondary winding, where are in turn, electrically insulated, placed tightly next to each other, the first element of the primary winding, the first element of the secondary winding, the second element of the primary winding, optionally the third element of the primary winding, the second element of the secondary winding and the optional fourth element of the primary winding, each element of the secondary winding comprising at least the first part of said element of secondary winding and the second part of said element of secondary winding, where both parts of said element of secondary winding are electrically insulated in one part and electrically connected with at least one rectifier mean in the another part, wherein one of the two parts of the first element of the secondary winding and one part of the two parts of the second element of secondary winding are connected together, while the remaining part of both parts of the two parts of the first element of the secondary winding and the remaining part of the two parts of the second element of the secondary winding are also connected together, all without additional rectifying means.

The welding transformer according to a preferred embodiment of the invention may comprise a plurality of interconnected primary windings and a plurality in pairs associated secondary windings, wherein each pair of said secondary windings comprises a first element of the secondary winding and a second element of the secondary winding, where in turn, electrically insulated to each other and tightly placed next to each other follow elements of primary winding and exchanging the first and the second element of the secondary winding, wherein at least one primary winding is exchanged with any of the secondary winding elements, wherein each secondary winding element comprises at least a first part of the secondary winding element and the second part of the secondary winding element, wherein said two parts of said each secondary winding element are electrically insulated in part and in part connected to at least one rectifier mean, wherein one of the two parts of the first element of the secondary winding and one part of the two parts of the second secondary winding element are connected, while the remaining part of both parts of the first element of the secondary winding and the remaining part of both parts of the second element of secondary winding are also connected together, all without additional rectifying means.

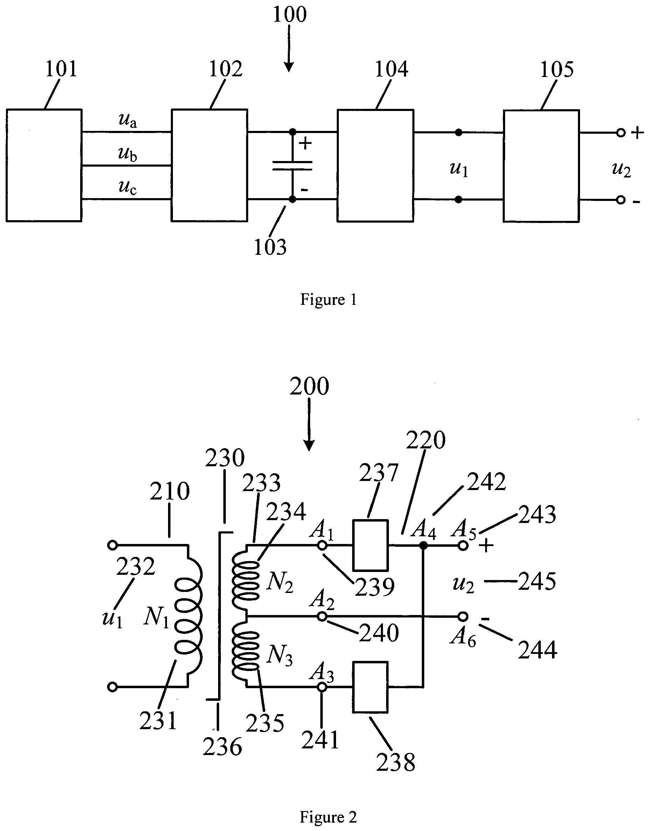

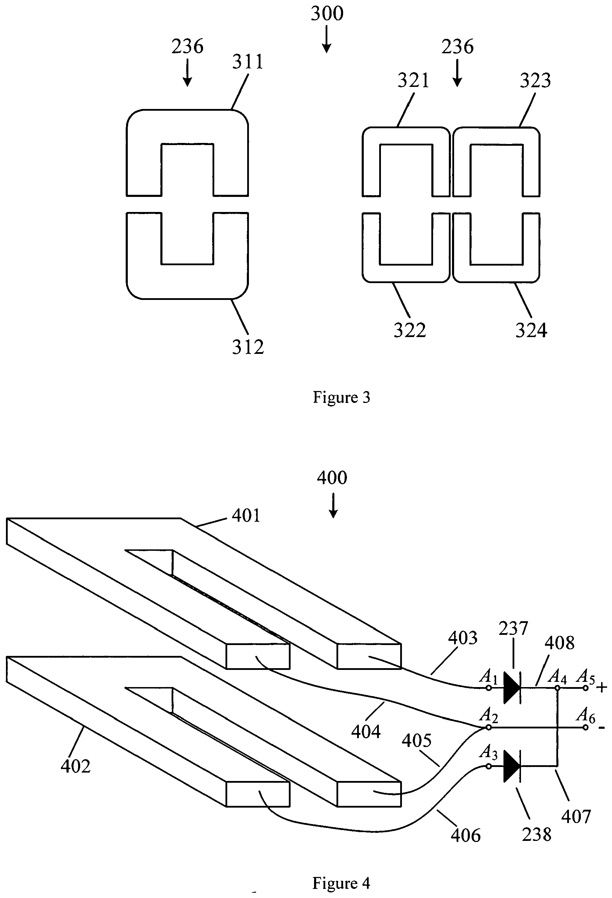

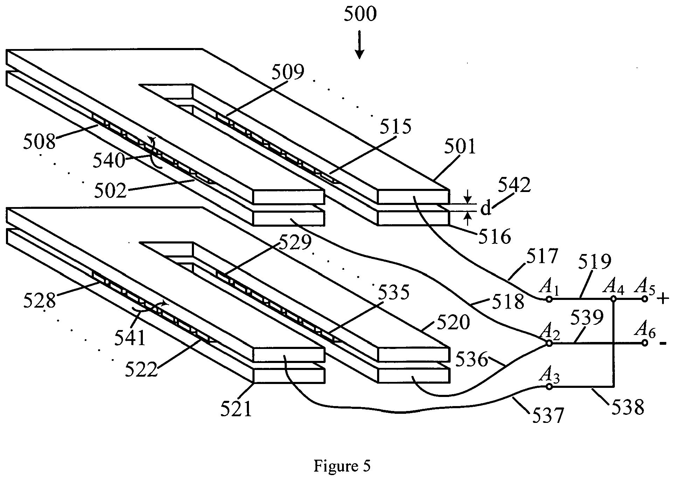

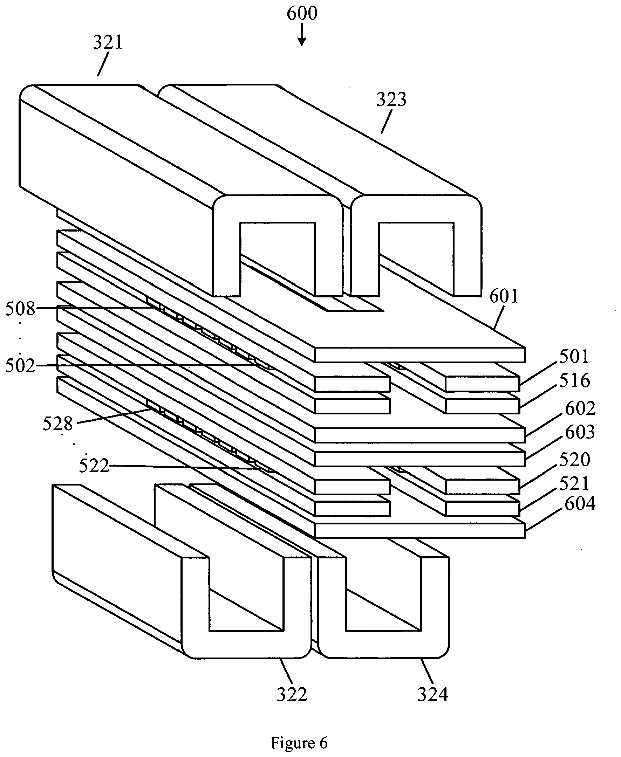

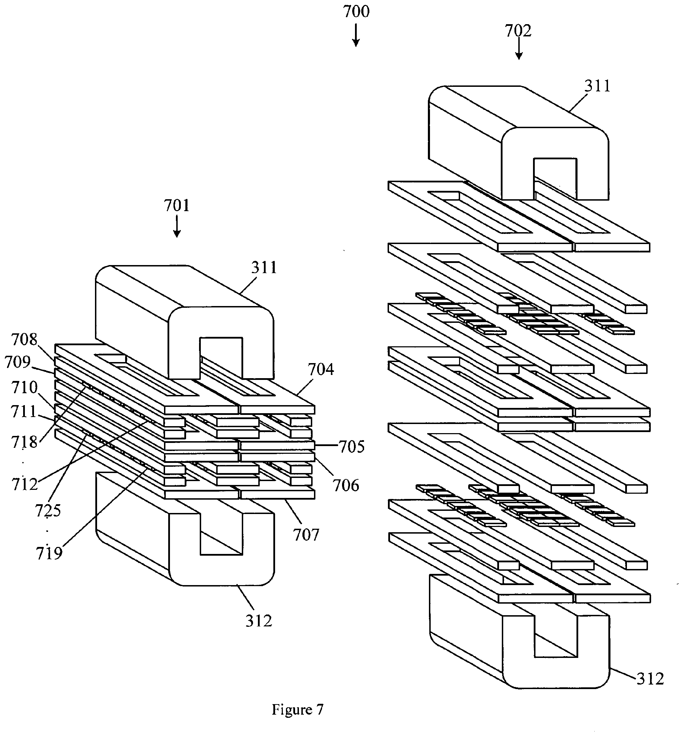

In the following, the invention is schematically illustrated in the figures, where figures are forming a part of the present application, and represent:
According to the present invention, Figure 1 shows a block diagram of a resistance spot welding system.
According to the present invention, Figure 2 shows an electrical circuit diagram of a welding transformer with an integrated output rectifier.
According to the present invention, Figure 3 shows two conventional embodiments of the iron core of the welding transformer.
According to the present invention, Figure 4 shows a conventional embodiment of a welding transformer having separately mounted output rectifier means.
According to the present invention, Figure 5 shows the arrangement of a secondary part of the winding with the integrated rectifier means of the output rectifier.
According to the present invention, Figure 6 shows the arrangement of a welding transformer with integrated rectifier means of an output rectifier in an exploded embodiment.
According to the present invention, Figure 7 shows the arrangement of a welding transformer with a different embodiment of the iron core and integrated rectifier means of the output rectifier in an exploded embodiment, on the left side with the composite primary and secondary windings, and on the right side with an exploded view of the two windings.

In the following, the invention is illustrated with a description of embodiments.

A block diagram of a resistance spot welding system is shown in Figure 1 and is denoted as a whole by number **100.** A resistance spot welding system comprises a voltage source **101,** an input rectifier **102,** and a dc link with a filter **103,** an input inverter **104,** and a welding transformer with a built-in output rectifier **105.**

The electrical circuit diagram of the transformer with an integrated output rectifier is schematically shown in Figure 2 and is as a whole denoted by a number **200.** The arrangement of the transformer includes a primary circuit **210** and a secondary circuit **220,** which are linked with a transformer **230.** The primary winding **231** with the number of turns *N*₁ of the transformer **230** is connected to the primary circuit **210** and is supplied with the primary voltage *u*₁ **232.** The secondary winding **233** has *N*₂+*N*₃ turns and is composed of two identical segments or elements **234** and **235,** where, for the sake of equality, the number of turns is the same *N*₃ = *N*₂. The primary and secondary winding of the transformer magnetically links the iron core **236,** which can be carried out differently. The primary voltage **232** is pulse width modulated - PWM in different ways.

The secondary circuit contains two rectifier means, **237** and **238,** which can be either power diodes or appropriate transistors, preferably MOSFET transistors. In the secondary circuit **220** are marked *A*₁ **239,** the central tapping *A*₂ **240,** which with the connection to point *A*₆ **244** represent one of the load terminals with the voltage *u*₂ **245,** the point *A*₄ **242,** where are added the currents from the rectifier means **237** and **238** and *A*₄ **242,** which with the connection represent the second terminal point *A*₅ **243** for the connection of the load.

The conventional embodiment of the iron core of the transformer **236** is given in Figure 3, where the elements as a whole are denoted by the number **300.** In this case, the first core arrangement of the transformer **236** consists of two identical parts **311** and **312,** while the second core arrangement consists of four parts **321, 322, 323** and **324,** each part having the shape of the letter C.

The conventional embodiment of the welding transformer **230** with the separated rectifier means **237** and **238**, shown in Figure 4, is arranged with two power diodes, instead of which the corresponding transistors, preferably a MOSFET transistors, can be used, where the elements as a whole are numbered by **400.** In this case, the first secondary winding element **234** and the second secondary element **235** form two turns made of a solid electrically conductive material. Both secondary turns named also elements of secondary winding, marked with numbers **401** and **402,** are indirectly connected via relatively long connections **403, 404, 405** and **406** at points *A*₁*, A*₂*, A*₃ with rectifier means **237** and **238.** Point *A*₄ can also be moved to point *A*₅, however, the relatively long link **407** remains, and in any case, the link **408** remains too.

In the conventional embodiments of the welding transformers shown in Figure 4, with separately arranged output rectifier means **237** and **238**, wherein both rectifier means can be made with power diodes or transistors, preferably MOSFET transistors, the power losses mostly depend on the ohmic resistance of the electrical connections between points *A*₁ to *A*₄ and *A*₃ to *A*₄ and the internal ohmic resistance of output rectifier means. The connections between the above mentioned points increase the ohmic resistance and the leakage inductance of the secondary circuit, which increase the values of time constants that determine the duration of the current changes in the individual branches of the secondary circuit **220.** From the point of view of reducing losses and increasing the rate of current change in both secondary branches would be the best the total elimination of these connections, or if the values of the ohmic resistances and inductances of these connections would be zero.

This can be done only by the incorporation, that is by an integration of both output rectifier means into the secondary winding **233** itself, where winding **233** consists of two elements **234** and **235,** which are symmetrical in structure. Each element of them can be divided into several parallel-coupled coils in order to achieve higher value of welding current. In addition, both output rectifier means can be arranged in the form of several power diodes connected in parallel or corresponding transistors connected in parallel, preferably MOSFET transistors connected in parallel, in order to achieve higher welding current.

The embodiment of the secondary winding according to this invention is shown in Figure 5, where all the elements as a whole are denoted by the number **500.** According to this invention is the first element of the secondary winding **401** divided into two parts **501, 516,** while the second element of the secondary winding **402** is also divided into two parts **520** and **521.** The parts of the individual elements - turns **501, 516, 520** and **521,** as shown in Figure 5, are equally thick along the turn, but they may also be of variable thickness along the turn, so that the total thickness of the two parts **501, 516** and **520, 521** is the same, which is not shown in Figure 5, and would allow a more homogeneous distribution of the current density in both parts along the turns. According to the present invention, the rectifying mean **237** is replaced by at least one rectifier means **502,** mounted evenly distributed in the form of several power diodes connected in parallel or transistors connected in parallel, preferably MOSFET transistors connected in parallel, in between the two elements **501** and **516** along the entire turn, while the rectifying mean **238** is replaced by at least one rectifier mean **522,** mounted evenly distributed in the form of several power diodes connected in parallel or transistors connected in parallel, preferably MOSFET transistors connected in parallel, in between the two elements **520** and **521** along the entire turn. In Figure 5, the substitute of the rectifier mean **237,** for example, consists of two times seven power diodes or corresponding transistors **502** to **515,** preferably MOSFET transistors, located along the turn on one side and on the other side and are connected in parallel.

*Preferred embodiment of the invention as seen in* *Figure 6* *comprises core arrangements 321, 323, **322, 324,** the plurality of primary and secondary coil plates, and the parallel connected rectifier means 502 between the coils 501, 516, and the parallel connected rectifier means 522 between the coils **520, 521.***
The arrangement of primary and secondary windings may also be concentric cylindrical.

The rectifying means **502** to **515** and **522** to **535** can be integrated into each part **501, 516** and **520, 521** of the secondary winding in such a way that the spacing d **542** equals only the thickness of the require*d* electrical insulation between **501** and **516** and **520** and **521.**

Due to the integration of the rectifier means into the two elements of the secondary winding, the connections of both elements with points *A*₅ and *A*₆ can be significantly shortened compared to the connections of the winding ends with points *A*₅ and *A*₆ in Figure 4.

Moreover, the connections **538, 539** and **519** in Figure 5 become unnecessary and can be eliminated, while the connections **517, 518, 536** and **537** can be significantly shorted, which means a reduction of leakage inductances, a reduction of ohmic resistances, and a reduction in the amount of the material and an increase in the power density of the device.

The current direction through the rectifier means **502** to **515** is indicated by the arrow **540**, the direction of the current through the rectifier means **522** to **535** is indicated by the arrow **541.**

The so-called shell-type construction of a welding transformer with integrated output rectifier means is shown in Figure 6, where all elements as a whole are numbered with a number **600.** In this case are the elements - coils **601, 602, 603** and **604** of the primary winding connected in series.

The so-called core-type construction of welding transformer with an integrated output rectifier in the arrangement of a welding transformer in the form of two C segments **311** and **312** is shown in Figure 7, where all the elements as a whole are numbered with a number **700.**

According to this invention, the number of rectifying means connected in parallel depends on the value of the required total output welding current.

According to this invention, the arrangement of the secondary winding can be classically flat, i.e. sandwiched or pancake construction in the form of elements **501, 516, 520** and **521** or concentric cylindrical construction.

The spacing between parts of each element of the secondary winding according to the present invention **501, 516** and **520, 521** is an arbitrary distance d **542,** where d can be equal only to the thickness of the required electrical insulation between **501** and **516, 520** and **521.**

## Claims

1. Welding transformer comprising at least one primary winding, further comprising at least one pair of elements of a secondary winding, namely a first element of the secondary winding and a second element of the secondary winding, and further at least one iron core, wherein said at least one primary winding, further at least one pair of elements of the secondary winding, namely the first element of the secondary winding and the second element of secondary winding, and further at least one iron core, are electrically insulated from one another, said windings at least partially wound around the iron core, wherein each element of said secondary winding comprises at least a first part of said element of said secondary winding and the second part of said element of said secondary winding, wherein said two parts of each of said two elements of secondary windings are partially electrically insulated from each other and partially connected with at least one rectifying means, wherein one part of said parts of the first element of secondary winding and one part of said parts of the second element of the secondary winding are connected together, while the remaining part of said parts of the first element of the secondary winding and the remaining part of said parts of the second element of secondary winding are also connected together, all without additional rectifying means,
**characterized in that**:
- the at least one iron core (236) comprises core arrangements (321, 322, 323, 324) having the shape of the letter C,
- the first element (234, 401) of the secondary winding (233) and the second element (235, 402) of the secondary winding (233) are identical and symmetrical in structure,
- the parts (501, 516, 520, 521) of the secondary winding (401, 402) are made of flat and solid conductor coils,
- the at least one rectifying means (237, 238) comprises at least one rectifier means (502-515, 522-535) being integrated into the secondary winding (233) itself and mounted in between the two parts (501, 516; 520, 521) of the two elements (234, 235; 401, 402) of the secondary winding which are partially electrically insulated from each other.

2. Welding transformer according to claim 1, further comprising rectifying means selected from the group consisting of an electrical power diode, a transistor, a MOSFET transistor.

3. Welding transformer according to any one of the preceding claims, further comprising at least two, preferably at least three, interconnected coils of elements of the primary winding and at least one pair of elements of the secondary winding, wherein the first element of the primary winding, the first element of the secondary winding, the second element of the primary winding, optionally the third element of the primary winding, the second element of the secondary winding and the optional fourth element of the primary winding are arranged next to each other and are electrically insulated from each other, each element of the secondary winding comprising at least the first part of said element of secondary winding and the second part of said element of secondary winding, wherein both parts of said elements of secondary winding are partially electrically insulated from each other in one part and partially electrically connected with at least one rectifying means with each other, wherein one of said two parts of the first element of the secondary winding and one part of said parts of the second element of secondary winding are connected together, while the remaining part of said parts of the first element of the secondary winding and the remaining part of said parts of the second element of the secondary winding are also connected together, all without additional rectifying means.

4. Welding transformer according to any one of the preceding claims, further comprising plurality of interconnected primary windings and a plurality in of secondary windings, said secondary windings interconnected in pairs, wherein each pair of said secondary windings comprises the first element of the secondary winding and the second element of the secondary winding, wherein the elements of the primary winding and interchangeably the first elements of the secondary winding and the second elements of the secondary winding are arranged electrically insulated from each other and tightly placed next to each other, wherein at least one primary winding is arranged next to any of the secondary winding elements, wherein each secondary winding element comprises at least the first part of the element of the secondary winding and the second part of element of the secondary winding, wherein said parts of said each secondary winding element are partially electrically insulated and partially connected to each other by means of at least one rectifying means, wherein one of the two parts of the first element of the secondary winding and one part of the two parts of the second secondary winding element are connected together, while the remaining part of said parts of the first element of the secondary winding and the remaining part of said parts of the second element of secondary winding are also connected together, all without additional rectifying means.

5. Welding transformer according to any one of the preceding claims, wherein the number of parallel-connected rectifier means depends on the value of the required total output welding current.

6. Welding transformer according to any one of the preceding claims, wherein the secondary winding is either of conventional sandwiched or pancake coils construction in the form of elements (501), (516), (520), (521) or alternative concentric cylindrical construction.

7. Welding transformer according to any one of the preceding claims, wherein the distance between the parts (501), (516) and (520), (521) of the secondary winding is an arbitrary distance d (542), wherein d can be equal only to the thickness of the required electrical insulation between the two parts (501) and (516) of the first element (234, 401) as well as between the two parts (520) and (521) of the second element (235, 402)

8. Welding transformer according to any one of the preceding claims, wherein cooling is performed, preferably by a secondary coil with a liquid, preferably by a water or air.

## Patentansprüche

1. Schweißtransformator, umfassend mindestens eine Primärwicklung, ferner umfassend mindestens ein Paar von Elementen einer Sekundärwicklung, nämlich ein erstes Element der Sekundärwicklung und ein zweites Element der Sekundärwicklung, und ferner mindestens einen Eisenkern,
wobei die mindestens eine Primärwicklung, ferner mindestens ein Paar von Elementen der Sekundärwicklung, nämlich das erste Element der Sekundärwicklung und das zweite Element der Sekundärwicklung, und ferner mindestens ein Eisenkern elektrisch voneinander isoliert sind, wobei die Wicklungen zumindest teilweise um den Eisenkern gewickelt sind, wobei jedes Element der Sekundärwicklung mindestens einen ersten Teil des Elements der Sekundärwicklung und den zweiten Teil des Elements der Sekundärwicklung umfasst, wobei die zwei Teile von jedem der zwei Elemente der Sekundärwicklungen teilweise elektrisch voneinander isoliert und teilweise mit mindestens einem Gleichrichtermittel verbunden sind, wobei ein Teil der Teile des ersten Elements der Sekundärwicklung und ein Teil der Teile des zweiten Elements der Sekundärwicklung miteinander verbunden sind, während der verbleibende Teil der Teile des ersten Elements der Sekundärwicklung und der verbleibende Teil der Teile des zweiten Elements der Sekundärwicklung auch miteinander verbunden sind, alles ohne zusätzliche Gleichrichtermittel, **dadurch gekennzeichnet, dass**:
- der mindestens eine Eisenkern (236) Kernanordnungen (321, 322, 323, 324) in der Form des Buchstabens C umfasst,
- das erste Element (234, 401) der Sekundärwicklung (233) und das zweite Element (235, 402) der Sekundärwicklung (233) identisch und in ihrer Struktur symmetrisch sind,
- die Teile (501, 516, 520, 521) der Sekundärwicklung (401, 402) aus flachen und festen Leiterspulen sind,
- das mindestens eine Gleichrichtermittel (237, 238) mindestens ein Gleichrichtermittel (502-515, 522-535) umfasst, das in die Sekundärwicklung (233) an sich integriert und zwischen den zwei Teilen (501, 516; 520, 521) der zwei Elemente (234, 235; 401, 402) der Sekundärwicklung montiert ist, die teilweise elektrisch voneinander isoliert sind.

2. Schweißtransformator nach Anspruch 1, ferner umfassend Gleichrichtermittel, ausgewählt aus der Gruppe, bestehend aus einer elektrischen Leistungsdiode, einem Transistor, einem MOSFET-Transistor.

3. Schweißtransformator nach einem der vorhergehenden Ansprüche, ferner umfassend mindestens zwei, vorzugsweise mindestens drei miteinander verbundene Spulen von Elementen der Primärwicklung und mindestens ein Paar von Elementen der Sekundärwicklung, wobei das erste Element der Primärwicklung, das erste Element der Sekundärwicklung, das zweite Element der Primärwicklung, optional das dritte Element der Primärwicklung, das zweite Element der Sekundärwicklung und das optionale vierte Element der Primärwicklung nebeneinander angeordnet sind und elektrisch voneinander isoliert sind, wobei jedes Element der Sekundärwicklung mindestens den ersten Teil des Elements der Sekundärwicklung und den zweiten Teil des Elements der Sekundärwicklung umfasst, wobei beide Teile der Elemente der Sekundärwicklung in einem Teil teilweise elektrisch voneinander isoliert und teilweise durch mindestens ein Gleichrichtermittel elektrisch miteinander verbunden sind, wobei einer der zwei Teile des ersten Elements der Sekundärwicklung und ein Teil der Teile des zweiten Elements der Sekundärwicklung miteinander verbunden sind, während der verbleibende Teil der Teile des ersten Elements der Sekundärwicklung und der verbleibende Teil der Teile des zweiten Elements der Sekundärwicklung auch miteinander verbunden sind, alles ohne zusätzliche Gleichrichtermittel.

4. Schweißtransformator nach einem der vorhergehenden Ansprüche, ferner umfassend eine Vielzahl von miteinander verbundenen Primärwicklungen und eine Vielzahl von Sekundärwicklungen, wobei die Sekundärwicklungen paarweise miteinander verbunden sind, wobei jedes Paar der Sekundärwicklungen das erste Element der Sekundärwicklung und das zweite Element der Sekundärwicklung umfasst, wobei die Elemente der Primärwicklung und austauschbar die ersten Elemente der Sekundärwicklung und die zweiten Elemente der Sekundärwicklung elektrisch voneinander isoliert und dicht nebeneinander angeordnet sind, wobei mindestens eine Primärwicklung neben einem der Sekundärwicklungselemente angeordnet ist, wobei jedes Sekundärwicklungselement mindestens den ersten Teil des Elements der Sekundärwicklung und den zweiten Teil des Elements der Sekundärwicklung umfasst, wobei die Teile des jeden Sekundärwicklungselements teilweise elektrisch isoliert und teilweise mithilfe von mindestens einem Gleichrichtermittel miteinander verbunden sind,
wobei einer der zwei Teile des ersten Elements der Sekundärwicklung und ein Teil der zwei Teile des zweiten Sekundärwicklungselements miteinander verbunden sind, während der verbleibende Teil der Teile des ersten Elements der Sekundärwicklung und der verbleibende Teil der Teile des zweiten Elements der Sekundärwicklung auch miteinander verbunden sind, alles ohne zusätzliche Gleichrichtermittel.

5. Schweißtransformator nach einem der vorhergehenden Ansprüche, wobei die Anzahl der parallel geschalteten Gleichrichtermittel von dem Wert des erforderlichen Gesamtausgangsschweißstroms abhängt.

6. Schweißtransformator nach einem der vorhergehenden Ansprüche, wobei die Sekundärwicklung entweder eine herkömmliche Sandwich- oder Flachspulenkonstruktion in Form von Elementen (501), (516), (520), (521) oder eine alternative konzentrische zylindrische Konstruktion ist.

7. Schweißtransformator nach einem der vorhergehenden Ansprüche, wobei der Abstand zwischen den Teilen (501), (516) und (520), (521) der Sekundärwicklung ein beliebiger Abstand d (542) ist, wobei d nur gleich der Stärke der erforderlichen elektrischen Isolierung zwischen den zwei Teilen (501) und (516) des ersten Elements (234, 401) sowie zwischen den zwei Teilen (520) und (521) des zweiten Elements (235, 402) sein kann.

8. Schweißtransformator nach einem der vorhergehenden Ansprüche, wobei ein Abkühlen vorzugsweise durch eine Sekundärspule mit einer Flüssigkeit, vorzugsweise durch Wasser oder Luft ausgeführt wird.

## Revendications

1. Transformateur de soudage comprenant au moins un enroulement primaire, comprenant en outre au moins deux éléments d'enroulement secondaire, à savoir un premier élément de l'enroulement secondaire et un second élément de l'enroulement secondaire, et en outre au moins un noyau de fer,
ledit au moins un enroulement primaire, en outre au moins deux éléments de l'enroulement secondaire, à savoir le premier élément de l'enroulement secondaire et le second élément de l'enroulement secondaire, et en outre au moins un noyau de fer, étant isolés électriquement les uns des autres, lesdits enroulements étant au moins partiellement enroulés autour du noyau de fer, chaque élément dudit enroulement secondaire comprenant au moins une première pièce dudit élément dudit enroulement secondaire et la seconde pièce dudit élément dudit enroulement secondaire, lesdites deux pièces de chacun desdits deux éléments d'enroulements secondaires étant partiellement isolées électriquement l'une de l'autre et partiellement connectées avec au moins un moyen de redressement, une pièce desdites pièces du premier élément d'enroulement secondaire et une pièce desdites pièces du second élément de l'enroulement secondaire étant connectées ensemble, alors que la pièce restante desdites pièces du premier élément de l'enroulement secondaire et la pièce restante desdites pièces de l'élément secondaire d'enroulement secondaire sont également connectées ensemble, toutes sans moyen de redressement supplémentaire,
**caractérisé en ce que** :
- ledit au moins un noyau de fer (236) comprend des systèmes de noyau (321, 322, 323, 324) ayant la forme de la lettre C,
- le premier élément (234, 401) de l'enroulement secondaire (233) et le second élément (235, 402) de l'enroulement secondaire (233) sont identiques et de structure symétrique,
- les pièces (501, 516, 520, 521) de l'enroulement secondaire (401, 402) sont constituées de bobines conductrices plates et solides,
- ledit au moins un moyen de redressement (237, 238) comprend au moins un moyen de redressement (502 à 515, 522 à 535) intégré dans l'enroulement secondaire (233) lui-même et monté entre les deux pièces (501, 516 ; 520, 521) des deux éléments (234, 235 ; 401, 402) de l'enroulement secondaire qui sont partiellement isolées électriquement l'une de l'autre.

2. Transformateur de soudage selon la revendication 1, comprenant en outre un moyen de redressement choisi dans le groupe constitué par une diode de puissance électrique, un transistor, un transistor MOSFET.

3. Transformateur de soudage selon l'une quelconque des revendications précédentes, comprenant en outre au moins deux, de préférence au moins trois, bobines interconnectées d'éléments de l'enroulement primaire et au moins deux éléments de l'enroulement secondaire, ledit premier élément de l'enroulement primaire, ledit premier élément de l'enroulement secondaire, ledit deuxième élément de l'enroulement primaire, éventuellement ledit troisième élément de l'enroulement primaire, ledit second élément de l'enroulement secondaire et ledit éventuel quatrième élément de l'enroulement primaire étant disposés les uns à côté des autres et étant isolés électriquement les uns des autres, chaque élément de l'enroulement secondaire comprenant au moins la première pièce dudit élément d'enroulement secondaire et la seconde pièce dudit élément d'enroulement secondaire, les deux pièces desdits éléments d'enroulement secondaire étant partiellement isolées électriquement l'une de l'autre dans une partie et partiellement connectées électriquement avec au moins un moyen de redressement l'une à l'autre, l'une desdites deux pièces du premier élément de l'enroulement secondaire et une pièce desdites pièces du second élément d'enroulement secondaire étant connectées ensemble, alors que la pièce restante desdites pièces du premier élément de l'enroulement secondaire et la pièce restante desdites pièces de l'élément secondaire de l'enroulement secondaire sont également connectées ensemble, toutes sans moyen de redressement supplémentaire.

4. Transformateur de soudage selon l'une quelconque des revendications précédentes, comprenant en outre plusieurs enroulements primaires interconnectés et en son sein plusieurs enroulements secondaires, lesdits enroulements secondaires étant interconnectés par paires, chaque pair desdits enroulements secondaires comprenant le premier élément de l'enroulement secondaire et le second élément de l'enroulement secondaire, lesdits éléments de l'enroulement primaire et de manière interchangeable lesdits premiers éléments de l'enroulement secondaire et lesdits seconds éléments de l'enroulement secondaire étant agencés isolés électriquement les uns des autres et placés étroitement à côte les uns des autres, au moins un enroulement primaire étant placé à côté de l'un quelconque des éléments d'enroulement secondaire, chaque élément d'enroulement secondaire comprenant au moins la première pièce de l'élément de l'enroulement secondaire et la seconde pièce de l'élément de l'enroulement secondaire, lesdites pièces dudit chaque élément d'enroulement secondaire étant partiellement isolées électriquement et partiellement connectées les unes aux autres au moyen d'au moins un moyen de redressement,
l'une des deux pièces du premier élément de l'enroulement secondaire et une pièce des deux pièces du second élément d'enroulement secondaire étant connectées ensemble, tandis que la pièce restante desdites pièces du premier élément de l'enroulement secondaire et la pièce restante desdites pièces du second élément d'enroulement secondaire étant également connectées ensemble, toutes sans moyen de redressement supplémentaire.

5. Transformateur de soudage selon l'une quelconque des revendications précédentes, le nombre de moyens de redressement connectés en parallèle dépendant de la valeur du courant de soudage de sortie total requis.

6. Transformateur de soudage selon l'une quelconque des revendications précédentes, ledit enroulement secondaire étant soit d'une construction de bobines plates ou prises en sandwich conventionnelle sous la forme d'éléments (501), (516), (520), (521) soit d'une construction cylindrique concentrique alternative.

7. Transformateur de soudage selon l'une quelconque des revendications précédentes, la distance entre les pièces (501), (516) et (520), (521) de l'enroulement secondaire étant une distance arbitraire d (542), d pouvant être égale seulement à l'épaisseur de l'isolation électrique requise entre les deux pièces (501) et (516) du premier élément (234, 401) ainsi qu'entre les deux pièces (520) et (521) du second élément (235, 402).

8. Transformateur de soudage selon l'une quelconque des revendications précédentes, le refroidissement étant effectué, de préférence par une bobine secondaire avec un liquide, de préférence par une eau ou de l'air.
